# EUROPEAN PATENT APPLICATION

(11) **EP 4 016 428 A1**
(43) Date of publication of application: **22.06.2022**
(21) Application number: 19942616.4
(22) Date of filing: 21.08.2019
(51) Int. Cl.: G06Q 20/38

(54) **DATA PROCESSING DEVICE AND SYSTEM**

(71) Applicant: Huawei Technologies Co., Ltd., Longgang District Shenzhen, Guangdong 518129 (CN)
(72) Inventor: HUANG, Tianqiang, Shenzhen, Guangdong 518129 (CN); LIU, Wei, Shenzhen, Guangdong 518129 (CN)
(74) Representative: Körber, Martin Hans
(86) International application number: PCT/CN2019/101804
(87) International publication number: WO 2021/031153

(57) **Abstract**

A data processing device includes the following modules. A first transceiver module (7031) is configured to receive first data sent by a first main control board (701). A second transceiver module (7032) is configured to receive second data sent by a second main control board (702). A skew measurement module (7033) is configured to determine a first skew between the first data and the second data. A feedback module is configured to send the first skew to the standby main control board (702), where the first skew is used by the first main control board (701) to perform first skew compensation on third data. The first transceiver module (7031) is further configured to: after receiving the first data, receive the third data sent by the first main control board (701). The second transceiver module (7032) is further configured to receive fourth data sent by the second main control board (702), where the fourth data and the third data are mutual backup data. A skew compensation module (70371) is configured to perform second skew compensation on the third data based on the fourth data. The device ensures that services at a peer end are not interrupted during active/standby switchover, and reduces delay jitter.

## Description

### TECHNICAL FIELD

This application relates to the communication field, and in particular, to a data processing device.

### BACKGROUND

A box-shaped device or a frame-shaped device generally adopts a hardware solution that dual main control boards and an interface board are used. The two main control boards are used to back up services to ensure normal service transmission. Generally, an active main control board collaborates with the interface board. When an exception occurs on the active main control board, active/standby switchover is triggered. A standby main control board takes over services, and the interface board completes service switchover from the active main control board to the standby main control board. For example, when the interface board determines that an exception occurs on the active main control board, the interface board sends a packet to or receives a packet from the original standby main control board, instead of sending a packet to or receiving a packet from the original active main control board.

However, service processing delays of the active main control board and the standby main control board cannot be consistent. Therefore, transmission delays of the active main control board and the standby main control board may be asymmetric when services are transmitted on a device. When services are sensitive to delay symmetry, an asymmetric transmission delay generated during active/standby switchover may lead to delay jitter or service interrupt. Therefore, the problem of how to reduce delay jitter introduced during active/standby switchover and perform active/standby switchover without incurring service interrupt needs to be urgently resolved.

### SUMMARY

This application provides a data processing device, to reduce delay jitter introduced during switching from an active main control board to a standby main control board, and resolve a problem that services of a peer device are interrupted during switching between active and standby main control boards.

To achieve the foregoing objective, embodiments of this application provide the following technical solutions.

A first aspect of this application provides a data processing device. The data processing device may be a clock data recovery (clock data recovery, CDR) chip or an interface board. The data processing device may include the following modules. A first transceiver module is configured to receive first data sent by a first main control board. A second transceiver module is configured to receive second data sent by a second main control board, where the first main control board and the second main control board work in an active/standby mode, and the first data and the second data are mutual backup data. A skew measurement module is configured to determine a first skew between the first data and the second data. The data processing device may further include a feedback module, configured to send the first skew to a standby main control board in the first main control board and the second main control board, where the first skew is used by the first main control board to perform first skew compensation on third data, and the feedback module is the same as or different from the first transceiver module. The first transceiver module is further configured to: after receiving the first data, receive the third data sent by the first main control board. The second transceiver module is further configured to receive fourth data sent by the second main control board, where the fourth data and the third data are mutual backup data. A skew compensation module is configured to perform second skew compensation on the third data based on the fourth data. It can be learned from the first aspect that the standby main control board performs first skew compensation on the third data based on the first skew, and the data processing device performs second skew compensation on the third data. In this way, the third data and the fourth data may be basically aligned by performing the two times of skew compensation. When the standby main control board is triggered to switch to an active main control board, delay jitter is reduced.

Optionally, with reference to the first aspect, in a first possible implementation, the device may further include a tracing module, configured to: when the first main control board is switched from the standby main control board to the active main control board, trace the third data on which the second skew compensation is performed. The data processing device may further include a fourth transceiver module, configured to send the third data to a peer device. With reference to the first possible implementation of the first aspect, it can be learned that the tracing module only needs to trace one lane of data to ensure that services of the peer device are not interrupted. For example, before the first main control board is switched to an active main control board, the tracing module traces data of the second main control board, that is, data of the active main control board. When the first main control board is switched from the standby main control board to the active main control board, because the third data and the fourth data are already aligned, the tracing module can ensure that the services at the peer end are not interrupted by tracing only the third data.

Optionally, with reference to the first aspect or the first possible implementation of the first aspect, in a second possible implementation, the first transceiver module may include P lanes, the second transceiver module may include Q lanes, and both P and Q are positive integers. The first transceiver module is specifically configured to receive the first data through the P lanes. The second transceiver module is specifically configured to receive the second data through the Q lanes. The skew measurement module is specifically configured to determine the first skew based on a difference between T1 and T2 and an interface rate of the device, where T1 is an arrival moment of a last lane in the P lanes, and T2 is an arrival moment of a last lane in the Q lanes. The second possible implementation of the first aspect provides the specific manner of determining the first skew.

Optionally, with reference to the second possible implementation of the first aspect, in a third possible implementation, each of the P lanes includes an alignment marker AM, and each of the Q lanes includes an AM. T1 is an arrival moment of an AM in the last lane of the P lanes, and T2 is an arrival moment of an AM in the last lane of the Q lanes. The third possible implementation of the first aspect provides the specific manner of determining the first skew. The data processing device may determine the first skew based on a phase offset between AMs in the first data and the second data.

Optionally, with reference to the first aspect or the first possible implementation of the first aspect, in a fourth possible implementation, the first transceiver module may include P lanes, the second transceiver module may include Q lanes, and both P and Q are positive integers. The first transceiver module is specifically configured to receive the first data through the P lanes. The second transceiver module is specifically configured to receive the second data through the Q lanes. The device may further include a buffering module, configured to buffer the P lanes and the Q lanes when receiving data of a first lane. The skew measurement module is specifically configured to determine the first skew based on a first buffer and a second buffer, where the first buffer is a buffer accumulated in the P lanes when a last lane of the P lanes arrives, and the second buffer is a buffer accumulated in the Q lanes when a last lane of the Q lanes arrives. The fourth possible implementation of the first aspect provides the specific manner of determining the first skew.

A second aspect of this application provides a data processing device. The device may include: a first transceiver module, configured to send first data to an interface board; an obtaining module, configured to obtain a first skew, where the first skew is a skew between first data and second data, the first skew is determined by the interface board, the second data is data sent by a second main control board, the second data and the first data are mutual backup data, the second main control board and a first main control board work in an active/standby mode, and the obtaining module is the same as or different from the first transceiver module; and a processing module, configured to perform skew compensation on third data based on the first skew obtained by a second transceiver module. The first transceiver module is further configured to send the third data on which the skew compensation is performed.

A third aspect of this application provides a data processing system, where the data processing system includes an interface board and a main control board. The interface board is the data processing device according to any one of the first aspect or the possible implementations of the first aspect, and the main control board is the data processing device according to the second aspect.

A fourth aspect of this application provides a data processing system, where the data processing system includes a clock data recovery CDR chip and a network processor NP chip. The CDR chip is the data processing device according to any one of the first aspect or the possible implementations of the first aspect, and the NP chip is the data processing device according to the second aspect.

A fifth aspect of this application provides a packet transport network (packet transport network, PTN) device, where the PTN device includes an interface board and a main control board. The interface board is the data processing device according to any one of the first aspect or the possible implementations of the first aspect, and the main control board is the data processing device according to the second aspect.

A sixth aspect of this application provides a packet transport network (packet transport network, PTN) device, where the PTN device includes a clock data recovery CDR chip and a network processor NP chip. The CDR chip is the data processing device according to any one of the first aspect or the possible implementations of the first aspect, and the NP chip is the data processing device according to the second aspect.

The embodiments of this application provide the data processing device. The interface board determines a skew between data sent by the active main control board and the standby main control board. The standby main control board may adjust the sent data based on the skew, and the interface board performs skew compensation on the data sent by the active main control board and the standby main control board. When active/standby switchover occurs, a data stream sent by the standby main control board and the data sent by the active main control board have been aligned on the interface board. Therefore, after the active/standby switchover, this reduces delay jitter caused by the active/standby switchover, and resolves the problem that services at the peer end are interrupted during switchover between the active/standby main control boards.

### BRIEF DESCRIPTION OF DRAWINGS

FIG. 1 is a schematic diagram of an application scenario according to an embodiment of this application;
FIG. 2 is a schematic diagram depicting a structure of a data processing device;
FIG. 3 is a schematic diagram depicting a structure of a data processing device including a first CDR chip;
FIG. 4A and FIG. 4B are a schematic diagram depicting a structure of a data processing device including a second CDR chip;
FIG. 5 is a schematic diagram of delay jitter caused by a second CDR chip;
FIG. 6 is a schematic diagram depicting a structure of a data processing device according to this application; and
FIG. 7A and FIG. 7B are a schematic diagram depicting a structure of another data processing device according to this application.

### DESCRIPTION OF EMBODIMENTS

The following clearly and completely describes the technical solutions in the embodiments of this application with reference to the accompanying drawings in the embodiments of this application. It is clearly that the described embodiments are merely some but not all of the embodiments of this application.

In this specification, the claims, and the accompanying drawings of this application, terms "first", "second", "third", "fourth", and the like (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

Some terms are used in the specification and claims to refer to specific components. A person skilled in the art can understand that a same component may be named differently by hardware manufacturers. In the specification and subsequent claims, components are distinguished between each other based on functional differences, instead of naming differences. The terms "including" and "comprising" mentioned in the specification and the claims are open class terms and should be construed as including but not limited to. In addition, coupling or coupled herein refer to a direct or indirect electrical connection means. Therefore, if it is described that a first device is coupled to a second device or that a first device and a second device are coupled, it indicates that the first device may be directly electrically connected to the second device, or indirectly electrically connected to the second device through another device or connection means.

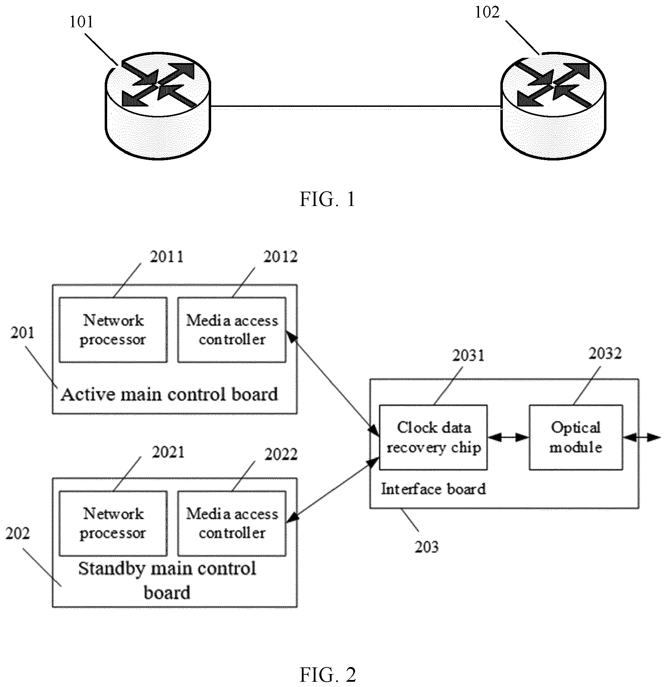

FIG. 1 is a schematic diagram of an application scenario according to an embodiment of the present invention. As shown in FIG. 1, a device 101 is referred to as a local device, and a device 102 is referred to as a peer device; or the device 102 is referred to as a local device, and the device 101 is referred to as a peer device. The device 101 and the device 102 are box-shaped devices or frame-shaped devices. For example, the device 101 and the device 102 may be routers, switches, optical transport network (optical transport network, OTN) devices, packet transport network (packet transport network, PTN) devices, or wavelength-division multiplexing (wavelength-division multiplexing, WDM) devices. In this embodiment of this application, it is not limited that types of the local device and the peer device need to be the same. For example, the local device may be a PTN device or a router, and the peer device may be a router or a switch.

Currently, the box-shaped device or the frame-shaped device generally adopts a hardware solution that dual main control boards and an interface board are used. The main control board may include one media access controller (media access controller, MAC) and one network processor. The main control board may alternatively include a plurality of MACs and a plurality of network processors. The MAC in the main control board may be coupled to the network processor in the main control board. The main control board may be implemented by using a field programmable gate array (field programmable gate array, FPGA) or an application specific integrated circuit (application specific integrated circuit, ASIC). FIG. 2 is a schematic diagram depicting a structure of a data processing device. The data processing device includes two main control boards: an active main control board 201 and a standby main control board 202. The active main control board is referred to as a master main control board, and the standby main control board is referred to as a slave main control board hereinafter. The two main control boards are used to back up services. Simply, in FIG. 2, the active main control board 201 includes only one MAC 2012 and one network processor 2011, and the standby main control board 202 includes only one MAC 2022 and one network processor 2021. The MAC 2012 is coupled to a network processor 2011, and the MAC 2022 is coupled to a network processor 2021. It should be noted that the quantity one of MACs and the quantity one of network processors are merely examples for description, and do not constitute any limitation on quantities of MACs and network processors. The following quantities all are also examples for description. The network processor on the main control board implements service processing such as packet forwarding and scheduling. For example, the network processor 2011 and the network processor 2021 may be network processors (network processor, NP), packet processors (packet processor, PP), packet engines (packet engine, PE), or application specific integrated circuits (application specific integrated circuit, ASIC). The network processor 2011 and the network processor 2021 may be programmable or not programmable. This is not limited in this embodiment of the present invention. It should be noted that in some scenarios, the main control board is also referred to as a forwarding processing board. As mentioned above, a person skilled in the art can understand that a same component may be named differently by hardware manufacturers. In the specification and subsequent claims, components are distinguished between each other based on functional differences, instead of naming differences. An interface board 203 uses a clock data recovery (clock data recovery, CDR) chip 2031 with an electronic switch (MUX/DEMUX) function, where the electronic switch includes a multiplexer circuit (MUX) and a demultiplexer circuit (DEMUX), to implement a selective sending or dual sending function from a line side to a system side and a selective receiving function from the system side to the line side, to support switchover between the master main control board 201 and the slave main control board 202. In this embodiment of this application, the line side is a side of the interface board close to an external interface. In other words, the line side is a side of the interface board close to an external optical fiber. The system side is a side of the interface board close to an internal interface. In other words, the system side is a side of the interface board close to a network processor. The selective sending function means that the CDR chip 2031 selects to send a packet to the master main control board 201 or the slave main control board 202, and the dual sending function means that the CDR chip 2031 sends a packet to both the master main control board 201 and the slave main control board 202. The selective receiving function means that the CDR chip 2031 selects to send a packet of the master main control board 201 or the slave main control board 202 to the line side. In addition, the main control board and the interface board may further include another component. This is not specifically limited in this embodiment of this application. For example, the interface board 203 may further include an optical module (optical module) 2032, configured for optical/electrical signal conversion.

In normal cases, the master main control board 201 collaborates with the interface board. When an exception occurs on the master main control board 201, active/standby switchover is triggered. The slave main control board 202 takes over services, and the CDR chip of the interface board completes service switchover from the master main control board 201 to the slave main control board 202. For example, when the CDR chip determines that an exception occurs on the master main control board 201, the CDR chip sends a packet to the slave main control board 202 or receives a packet from the slave main control board 202, instead of sending a packet to the master main control board 201 or receiving a packet from the master main control board 201.

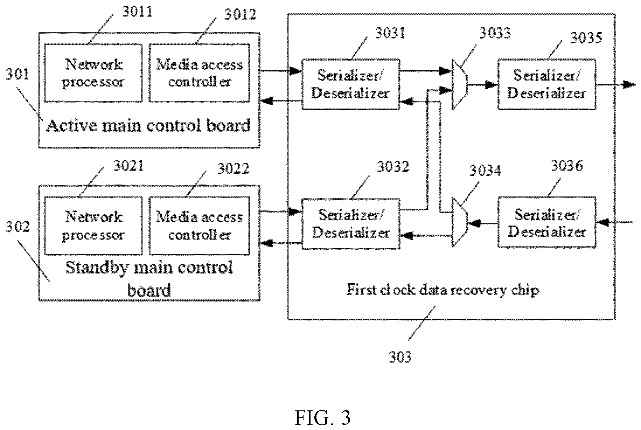

A structure of the CDR chip varies with different scenarios. FIG. 3 is a schematic diagram depicting a structure of a device including a first CDR chip 303. The first CDR chip 303 shown in FIG. 3 includes circuits such as a serializer/deserializer (SERializer/DESerializer, serdes) and a MUX/DEMUX. For ease of description, FIG. 3 shows only a serializer/deserializer 3031, a serializer/deserializer 3032, a serializer/deserializer 3035, a serializer/deserializer 3036, a MUX/DEMUX 3033, and a MUX/DEMUX 3034. The MUX/DEMUX 3033 and the MUX/DEMUX 3034 circuits are also referred to as electronic switches. The serdes circuit may convert parallel physical code into serial physical code for sending, or convert serial physical code into parallel physical code for receiving, so that data can be serially transmitted. Therefore, a transmission rate is high. In this application, for distinguishing, a serdes circuit capable of converting parallel physical code into serial physical code for sending is referred to as a serializer (also referred to as serdes Tx), and a serdes circuit capable of converting serial physical code into parallel physical code for receiving is referred to as a deserializer (also referred to as serdes Rx). The first CDR chip 303 does not support an Ethernet physical coding sublayer (Ethernet physical coding sublayer, ETH PCS). When an exception occurs on a master main control board 301 and active/standby switchover is triggered, the first CDR chip 303 generally switches services to a slave main control board 302 at any moment. However, as it is difficult to keep alignment between service processing delays of the master and slave main control boards, it is accordingly difficult to implement alignment between ETH protocol words of the master and slave main control boards. Neither network-side protocol words nor packets received by the first CDR chip 303 from the master and slave main control boards are synchronized. Consequently, when a device sends a packet, a network-side protocol word of a device interface-side packet is shifted, and service interrupt occurs on a peer device. For the active main control board 301 and the standby main control board 302, refer to the active main control board 201 and the standby main control board 202 in FIG. 2. For a network processor 3011 and a network processor 3021, refer to the network processor 2011 and the network processor 2021 in FIG. 2. For a media access controller 3012 and a media access controller 3022, refer to the media access controller 2012 and the media access controller 2022 in FIG. 2. Details are not described herein again.

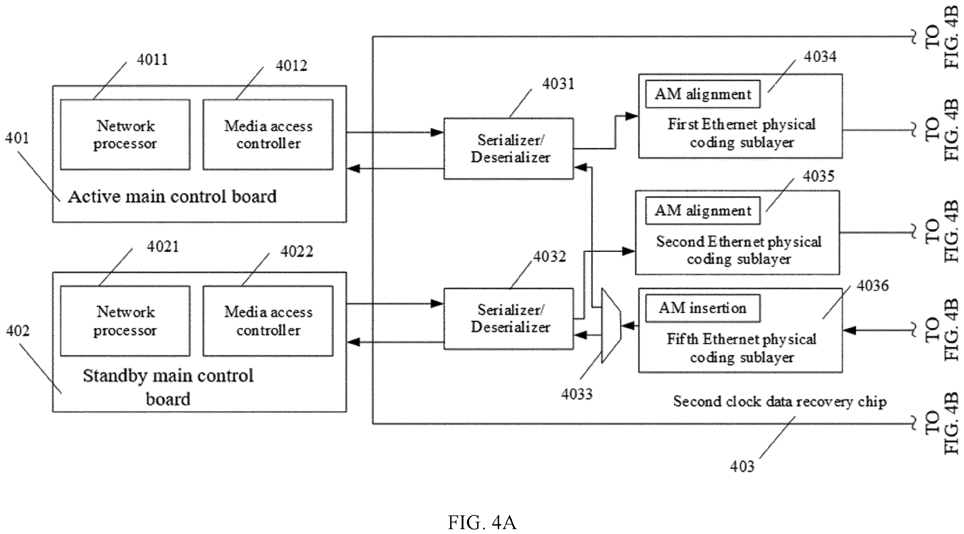

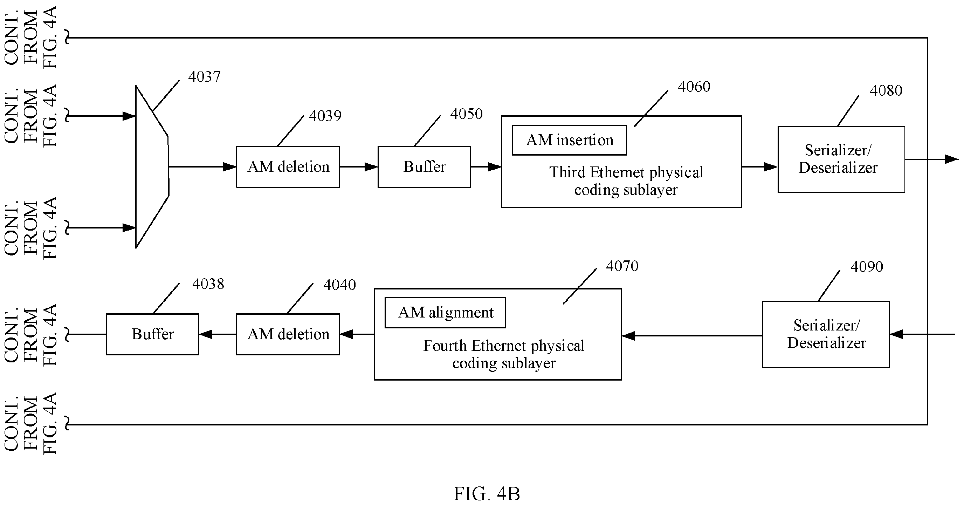

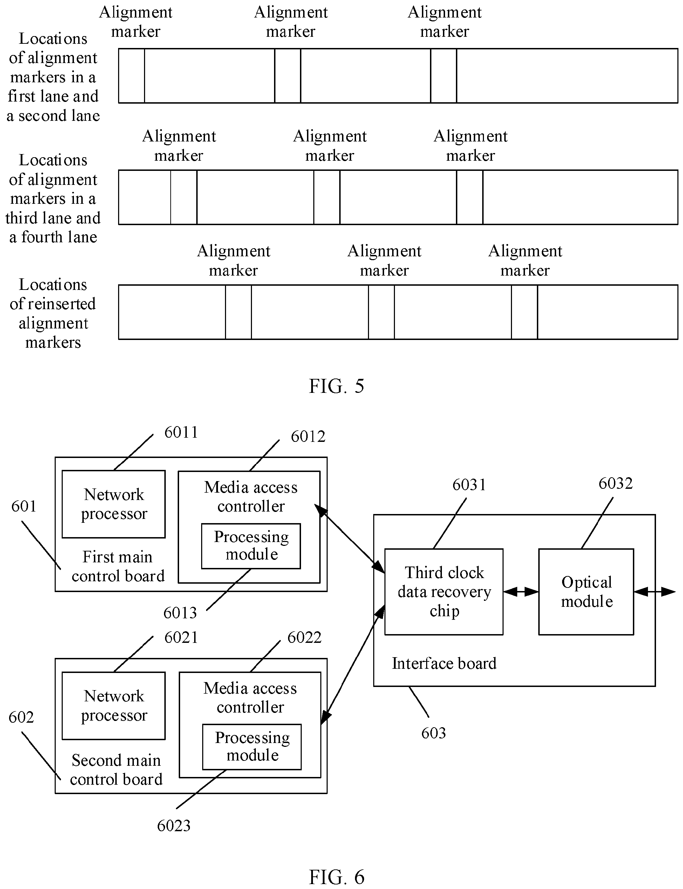

FIG. 4A and FIG. 4B are a schematic diagram depicting a structure of a device including a second CDR chip 403. The second CDR chip 403 shown in FIG. 4A and FIG. 4B includes a serdes circuit, a MUX/DEMUX circuit, an Ethernet physical coding sublayer, and the like. The second CDR chip 403 supports the Ethernet physical coding sublayer, and the Ethernet physical coding sublayer may parse an 8-bit/10-bit coding or 64-bit/66-bit coding synchronization header of an ETH protocol and an alignment marker (alignment marker, AM) of the ETH protocol. This technical solution can implement hitless switching at a protocol layer from a system side to a line side when active/standby switchover occurs. The following provides detailed description with reference to FIG. 4A, FIG. 4B, and FIG. 5. A master main control board 401 and a slave main control board 402 separately send data to the second CDR chip 403 through an Ethernet interface. Different Ethernet interfaces correspond to different quantities of lanes (lanes). The quantity of lanes may be understood as a quantity of links for sending data on parallel links. For example, if an Ethernet interface uses a 25G Ethernet protocol, a corresponding quantity of lanes may be 1, and if the master main control board 401 sends data to the second CDR chip 403, the master main control board 401 may send the data to the second CDR chip 403 through one lane. If an Ethernet interface uses a 40G Ethernet protocol, a corresponding quantity of lanes may be 2 or 4. If the master main control board 401 sends data to the second CDR chip 403, the master main control board 401 may send the data to the second CDR chip 403 through the two lanes, or the master main control board 401 may send the data to the second CDR chip 403 through four lanes. If the Ethernet interface uses a 50G Ethernet protocol, a corresponding quantity of lanes is 1 or 2. If the Ethernet interface uses a 100G Ethernet protocol, a quantity of corresponding lanes may be 1, 2, 4, or 10. Other cases are similar. For a case in which the master main control board 401 and the slave main control board 402 send data to the second CDR chip 403 through P lanes, refer to the foregoing example cases of the 25G Ethernet protocol and 40G Ethernet protocol, where P is a positive integer. Examples are not described herein.

The quantity of lanes corresponds to a quantity of serdes on the second CDR chip 403, and P lanes may correspond to P serdes on the second CDR chip 403. For example, after the master main control board 401 sends data through the P lanes, the second CDR chip 403 receives the data in the P lanes through the P serdes. Data in each of the P lanes is sent serially. The P serdes respectively converts serial data of the P lanes into parallel data after data passes through the P serdes. For example, serial data in any one of the P lanes is demultiplexed into a plurality of multi-bit lanes by using the serdes. After receiving the P lanes of data, the second CDR chip 403 needs to use a clock to process the P lanes of data streams in the P physical lanes. For example, the second CDR chip 403 is used to process the P lanes of data streams, to ensure time synchronization between processed P lanes of data streams. Simply, the following describes an example in which an Ethernet protocol correspondingly includes two lanes. The master main control board 401 converts a data stream into data streams transmitted in two lanes, where each data stream includes an AM and a data block group. Each data block in the data stream is obtained by performing physical layer coding on an Ethernet frame stream, and AMs are periodically inserted after the physical layer coding is performed on the Ethernet frame stream. The physical layer coding may be 64-bit/66-bit coding. When the physical layer coding is 64-bit/66-bit coding, a quantity of bits included in one data block is 66. In the 66-bits data block, two bits may be a synchronization header. Certainly, any bit may be a synchronization header. The quantity (two bits) herein is merely an example for description, and does not constitute any limitation. After decoding the received data streams in the two lanes sent by the master main control board 401, a first Ethernet physical coding sublayer 4034 performs alignment processing on the AMs in the two lanes. After decoding received data in two lanes sent by the slave main control board 402, a second Ethernet physical coding sublayer 4035 performs alignment processing on AMs in the two lanes. For clear description, the two lanes sent by the master main control board 401 are referred to as a first lane and a second lane herein, and the two lanes sent by the slave main control board 402 are referred to as a third lane and a fourth lane. The AMs in the first lane and the second lane are aligned, and the AMs of the third lane and the fourth lane are also aligned through processing performed by the first Ethernet physical coding sublayer 4034 and the second Ethernet physical coding sublayer 4035. However, as shown in FIG. 5, the AMs in the first lane and the second lane are not necessarily aligned with the AM in the third lane. In other words, AM words of data streams sent by the master main control board 401 and the slave main control board 402 are not necessarily aligned. Therefore, after passing through an electronic switch 4037, the second CDR chip 403 deletes all the AMs in the first lane, the second lane, the third lane, and the fourth lane by using an AM deletion module 4039. After passing through a buffer 4050, a third Ethernet physical coding sublayer 4060 also performs physical layer coding on the first lane, the second lane, the third lane, and the fourth lane, and periodically inserts an AM, to ensure that AMs in the first lane, the second lane, the third lane, and the fourth lane are aligned. For a process in which the second CDR chip 403 receives a data stream sent by the line side, after the data stream passes through a deserializer, a fourth Ethernet physical coding sublayer 4070 performs alignment processing on AMs in the data stream, and then deletes the AMs. After the data stream passes through a buffer 4038, a fifth Ethernet physical coding sublayer 4036 periodically reinserts AMs into the data stream.

The second CDR chip 403 adopts AM deletion and reinsertion technologies. The AMs are re-inserted at the third Ethernet physical coding sublayer 4060. This can ensure that no service interrupt occurs at an Ethernet physical coding sublayer of a peer device during active/standby switchover, and the peer device does not perceive switchover of a local device. However, this also causes another problem. Because the AMs are reinserted at the third Ethernet physical coding sublayer 4060, this cannot ensure that locations of the AMs are consistent with those in the data stream sent by the main control boards (the active main control board and the standby main control board). As shown in FIG. 5, for example, the third Ethernet physical coding sublayer 4060 re-performs physical layer coding on the first lane and the second lane or the second Ethernet physical coding sublayer 4035 re-performs physical layer coding on the third lane and the fourth lane, and periodically inserts AMs. Locations of the AMs may be different from locations of original AMs in the first lane, the second lane, the third lane, and the fourth lane. Consequently, delay jitter is introduced after the data stream passes through the second CDR chip 403. The delay jitter has little impact on common forwarding services, but greatly affects 1588 precision. For example, when an Ethernet interface is a 100GE interface, a reinserted AM is 1280 unit interval (unit interval, UI) shifts. In the second CDR, there is an offset between positions at which AM words are received and sent, which causes a unidirectional delay jitter of about 12.8 nanoseconds (1280/100 Gbps = 12.8 ns). In a box-shaped device or a frame-shaped device, a main control board performs processing such as 1588 timestamping and line delay compensation. Smaller jitter of data streams on an interface board indicates higher 1588 precision of a device.

To resolve the foregoing technical problem, this application provides a data processing device, to reduce delay jitter, improve 1588 processing precision, and ensure high-precision 1588 system specifications. Before the technical solutions provided in this application are described, 1588 is first briefly described. 1588, also known as the Institute of Electrical and Electronics Engineers 1588 (institute of electrical and electronics engineers 1588, IEEE 1588), is a time synchronization protocol. Currently, mainstream time synchronization technical solutions further include the network time protocol (network time protocol, NTP), synchronous Ethernet, GPS, and the like. However, these time synchronization solutions are inferior to the IEEE 1588. For example, the IEEE 1588 can further improve synchronization precision compared with the NTP technology. In an Ethernet-based distributed network, the 1588 V2 protocol can achieve nanosecond-level precision compared with the NTP technology which achieves millisecond-level synchronization precision. However, it should be noted that the IEEE 1588 is used as an example for description of the technical solution provided in this application. Based on the technical solutions provided in this application, a person skilled in the art can certainly apply the technical solutions provided in this application to other time synchronization technical solutions.

FIG. 6 is a schematic diagram depicting a structure of a data processing device according to this application.

As shown in FIG. 6, the data processing device according to an embodiment of this application may include a first main control board 601, a second main control board 602, and an interface board 603, where the first main control board 601 and the second main control board 602 are both coupled to the interface board 603. The first main control board 601 includes a network processor 6011 and a media access controller 6012, and the media access controller 6012 includes a processing module 6013. The second main control board includes a network processor 6021 and a media access controller 6022, and the media access controller 6022 includes a processing module 6023. For the network processor 6011 and the network processor 6021, refer to the network processors described in FIG. 2 to FIG. 4A. The interface board 603 includes a third CDR chip 6031, and may further include another component. This is not specifically limited in this embodiment of this application. For example, the interface board 603 may further include an optical module (optical module) 6032, configured for optical/electrical signal conversion.

The first main control board 601 is configured to send first data to the interface board 603.

The second main control board 602 is configured to send second data to the interface board 603. The first main control board 601 and the second main control board 602 work in an active/standby mode, and the first data and the second data are mutual backup data. Generally, an active main control board collaborates with the interface board 603. When an exception occurs on the active main control board, active/standby switchover is triggered. A standby main control board takes over services, and the data processing device completes service switchover from the active main control board to the standby main control board. For example, when the interface board 603 determines that an exception occurs on the active main control board, the interface board 603 sends a packet to or receives a packet from the standby main control board, instead of sending a packet to or receiving a packet from the active main control board.

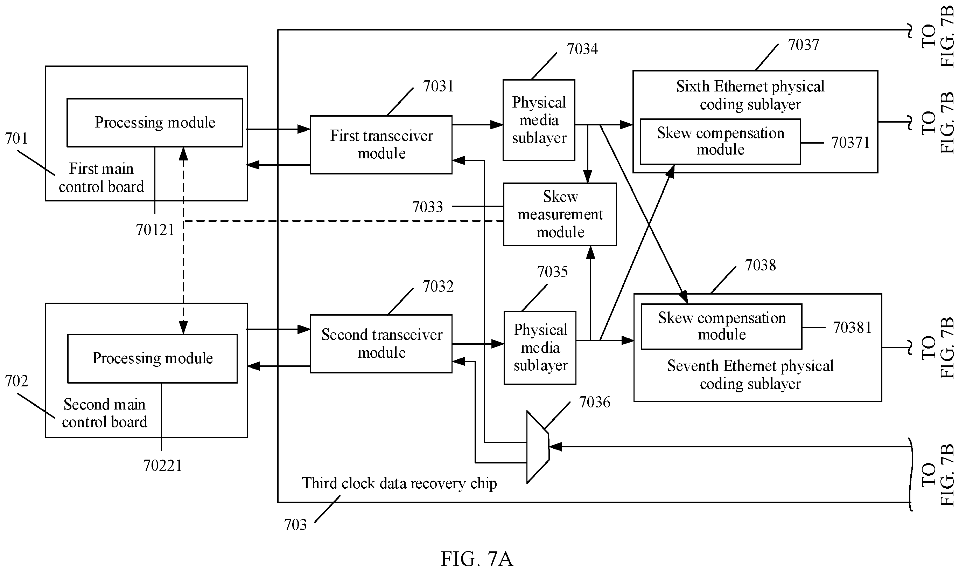

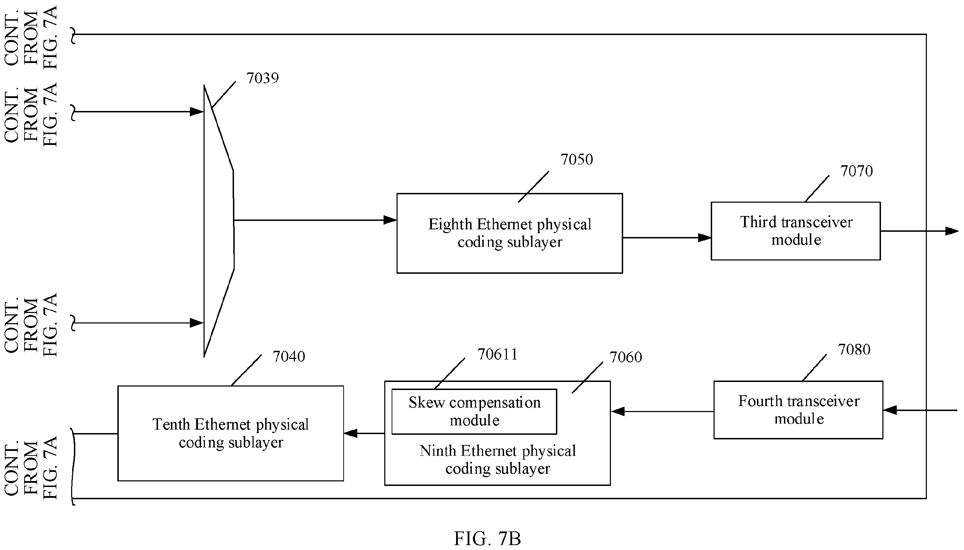

The interface board 603 is configured to determine a skew (hereinafter referred to as a first skew) between the first data and the second data. The first skew is a phase offset between a first Ethernet protocol word of the first data and a first Ethernet protocol word of the second data, and the first skew may be at a bit level. For example, when the first Ethernet protocol word is an AM word, the first skew is a phase offset between an AM word in the first data and an AM word in the second data. Factors such as a difference in propagation speeds in lanes over media may result in misalignment in a plurality of data transmission lanes. When the interface board 603 receives the first data and the second data, AM words in the first data are generally not aligned with AM words in the second data. For example, it is assumed that the interface board aligns AM words in all lanes corresponding to the first data after receiving the first data, and that the interface board aligns AM words in all lanes corresponding to the second data after receiving the second data. However, in this case, AM words of the first data and the second data are generally not aligned. There are a plurality of implementations of how to determine the skew between the first data and the second data. The following provides detailed description with reference to FIG. 7A and FIG. 7B.

The interface board 603 is further configured to send the first skew to the standby main control board.

Assuming that the first main control board 601 is a standby main control board in this case, the first main control board 601 is further configured to compensate, based on the first skew, for data to be sent next time. The data to be sent next time herein refers to data (briefly referred to as third data hereinafter) that is sent most recently after the first main control board 601 receives the first skew. For example, the first main control board may determine, based on the first skew, to delay sending the third data; or the first main control board may determine, based on the first skew, to send the third data in advance. Specifically, the network processor in the first main control board may perform skew compensation on the third data based on the first skew. Because the network processor in the first main control board is coupled to a sending module in the first main control board, that the first main control board sends data outside may be understood as that the network processor in the first main control board directly or indirectly sends data outside. It should be noted that it is almost impossible for the first main control board to completely eliminate the first skew as costs and power consumption increase accordingly for skew elimination. Therefore, in this solution, the first main control board only needs to control precision to be within a preset range.

The first main control board 601 is further configured to send the third data to the interface board 603.

The second main control board 602 is further configured to send fourth data to the interface board 603, where the third data and the fourth data are mutual backup data. In this embodiment of this application, the standby main control board performs skew compensation on the sent data based on the first skew. This does not affect data transmission of the main control board and normal service running.

The interface board 603 is further configured to perform skew compensation on the received third data and the received fourth data.

The foregoing has described that the interface board 603 determines the first skew based on the first data and the second data, and the first main control board has performed, based on the first skew, first skew compensation on the data to be sent next time, that is, the third data, so that a skew (briefly referred to as a second skew hereinafter) between the third data and the fourth data falls within a preset range, for example, 100 UI. However, there is still a skew, that is, a difference between the first skew and the second skew. In this case, the interface board may minimize or eliminate the skew between the third data and the fourth data through a skew compensation circuit. The skew compensation circuit in this embodiment may be implemented by using any skew compensation circuit, provided that the skew compensation circuit can implement a function of a skew compensation module. The existing skew compensation circuit is a well-known technology, and therefore details are not described herein. It should be noted that, if the first interface board 601 does not compensate for the skew between the third data and the fourth data to a preset range, and only the interface board 603 compensates for the skew between the third data and the fourth data, a large amount of buffered data is required, resulting in increased costs and power consumption. In this solution, the interface board 603 effectively collaborates with the main control board to implement strict alignment between data sent by the first main control board and the second main control board through two times of skew compensation.

On this basis, the interface board 603 traces a data stream of the active main control board in a downlink transmit direction, to align output data with input data. When active/standby switchover occurs, because a data stream of the first main control board 601 is aligned with a data stream of the second main control board 602, after the switchover, the data stream sent by the interface board 603 can still be aligned with the data stream of the second main control board 602. When the interface board receives a data stream from a line side, because there is only one data source, that is, because the data stream received by the interface board 603 is from a same transmitter, the interface board 603 traces the input data stream so that there is little delay jitter in a packet passing through the interface board 603 in an uplink direction. The following uses a downlink direction as an example to describe the technical effects. As described above that the second CDR chip 403 uses the AM deletion and re-insertion technologies, although this can ensure that no service interrupt occurs on the peer device during active/standby switchover, delay jitter is caused when a data stream passes through the second CDR chip. For example, assuming that data blocks before and after a first AM in the first lane sent by the master main control board 401 are a first data block and a second data block, the second CDR chip 403 deletes the first AM and inserts a second AM after receiving the first lane. However, locations of the second AM and the first AM are usually different. Assuming that the second AM is inserted after the second data block, a location of the second data block in the first lane after the second AM is inserted is different from a location of the second data block in the first lane before the first AM is deleted, but the insertion of the second AM makes no difference to the location of the first data block in the first lane. Therefore, it can be learned that due to deletion and insertion of an AM, delay jitter is introduced after a data stream enters the second CDR chip. In the technical solution provided in this application, no AM needs to be deleted or inserted, the interface board can implement alignment between AM words in output data (data sent by the interface board to the peer end) and input data (data received by the interface board from the main control board) by tracing only one data stream, for example, tracing only an AM in the active main control board. When active/standby switchover occurs, because data streams from the first main control board and the second main control board are aligned in advance in this solution, shift does not occur after the data stream passes through the interface board, by tracing only an AM in the data stream sent by the active main control board after the switchover, and delay jitter is not introduced.

According to the foregoing solution, it can be implemented that no shift occurs on uplink and downlink data streams after they pass through the interface board 603, so that little delay jitter is introduced to packets passing through the third CDR chip 6031 in both uplink and downlink directions. The downlink direction is a direction of a data stream from the main control board to the interface board, and the uplink direction is a direction of a data stream from the interface board to a line side, where the line side is a fiber side.

The foregoing describes the data processing device provided in this embodiment of this application. The data processing device may be an interface board. Certainly, the data processing device may alternatively be a CDR chip or a data processing circuit. The following provides a schematic diagram depicting a structure of the third CDR chip 6031.

FIG. 7A and FIG. 7B are a schematic diagram depicting a structure of a data processing device according to this application.

As shown in FIG. 7A and FIG. 7B, the data processing device according to an embodiment of this application may include the following modules.

A first transceiver module 7031 is configured to receive first data sent by a first main control board 701 in a downlink direction. The first transceiver module 7031 may include P lanes, where P is a positive integer. P may be 1, 2, 4, or the like. A value of P is not limited in this embodiment of this application, and may be set according to an actual requirement. The first transceiver module 7031 may be considered as a first communication interface of a third CDR chip. For example, the first transceiver module may be considered as a serdes circuit.

A second transceiver module 7032 is configured to receive second data sent by a second main control board 702 in the downlink direction. The second transceiver module 7032 may include Q lanes, where Q is a positive integer. Q may be equal or unequal to P. This is not limited in this embodiment of this application. The second transceiver module 7032 may be considered as a second communication interface of the third CDR chip. For example, the second transceiver module may be considered as a serdes circuit. The first main control board 701 and the second main control board 702 work in an active/standby mode. To be specific, when the first main control board 701 is an active main control board, the second main control board 702 is a standby main control board; or when the second main control board 702 is an active main control board, the first main control board 701 is a standby main control board. Generally, the active main control board collaborates with the third CDR chip 703. When an exception occurs on the active main control board, active/standby switchover is triggered. A standby main control board takes over services, and the data processing device completes service switchover from the active main control board to the standby main control board. For example, when the third CDR chip 703 determines that an exception occurs on the active main control board, the third CDR chip 703 sends a packet to or receives a packet from the standby main control board, instead of sending a packet to or receiving a packet from the active main control board.

A third transceiver module 7070 is configured to send data to a line side, that is, send data to a peer device. The third transceiver module 7070 may be considered as a third communication interface of the third CDR chip. For example, the third transceiver module may be considered as a serdes circuit.

A fourth transceiver module 7080 is configured to receive data from the line side, that is, receive data sent by the peer device. The fourth transceiver module 7080 may be considered as a fourth communication interface of the third CDR chip. For example, the fourth transceiver module may be considered as a serdes circuit.

A skew measurement module 7033 is coupled to the first transceiver module and the second transceiver module, and is configured to determine a skew between the first data sent by the first main control board 701 and the second data sent by the second main control board 702. The first skew is a phase offset between a first Ethernet protocol word of the first data and a first Ethernet protocol word of the second data. The first skew may be measured in bits. A skew between data sent by the first main control board 701 and data sent by the second main control board 702 is briefly referred to as the first skew hereinafter.

In a specific implementation, it is assumed that the first transceiver module 7031 receives, through the P lanes, data sent by the first main control board, where the data is referred to as the first data hereinafter. The second transceiver module 7032 receives, through the Q lanes, data sent by the second main control board, where the data is referred to as the second data hereinafter. The first data and the second data are mutual backup data. Both P and Q are positive integers, an arrival moment of a last lane in the P lanes is T1, and an arrival moment of a last lane in the Q lanes is T2. The skew measurement module 7033 determines, based on a difference between T1 and T2 and an interface rate of the third CDR chip, a skew between the data sent by the first main control board 701 and the data sent by the second main control board 702, that is, the first skew, where the first skew reaches bit-level precision.

In a specific implementation, it is assumed that the first transceiver module 7031 receives the first data through the P lanes and the second transceiver module 7032 receives the second data through the Q lanes, where both P and Q are positive integers. Each of the P lanes includes an alignment marker AM, and each of the Q lanes includes an AM. T1 is an arrival moment of an AM in the last lane of the P lanes, and T2 is an arrival moment of an AM in the last lane of the Q lanes. The skew measurement module 7033 determines, based on a difference between T1 and T2 and the interface rate of the third CDR chip, the skew between the data sent by the first main control board 701 and the data sent by the second main control board 702.

In a specific implementation, it is assumed that the first transceiver module receives the first data through the P lanes and the second transceiver module receives the second data through the Q lanes, where both P and Q are positive integers. The third CDR chip may further include a buffering module, which is not shown in the figure. The buffering module is configured to buffer the P lanes and the Q lanes when data of a first lane is received. When the last lane of the P lanes arrives, a buffer accumulated in the P lanes is a first buffer. When the last lane of the Q lanes arrives, a buffer accumulated in the Q lanes is a second buffer offset. The third CDR chip determines, based on a difference between the first buffer and the second buffer, the skew between the data sent by the first main control board 701 and the data sent by the second main control board 702.

The third CDR chip may send the first skew to the first main control board 701 through the first transceiver module 7031. Alternatively, the third CDR chip sends the first skew to the first main control board 701 through a feedback module (not shown in the figure). A processing module 70121 in the first main control board may adjust, based on the received skew, data to be sent next time. The first main control board may receive the first skew through the first transceiver module, or the first main control board may obtain the first skew through an obtaining module (not shown in the figure). For example, the first main control board may obtain the first skew from the third CDR chip through software invoking. The processing module 70121 in the first main control board may adjust, based on the received skew, the data to be sent next time. For example, the processing module 70121 may perform, based on the received skew, delay compensation on an AM word included in the data to be sent next time, and adjust a sending location of the AM word, where adjustment precision is controlled to be within a small range (for example, 100 UI). The processing module may be integrated into a media access controller of the first main control board. It should be noted that other components, for example, a network processor and the media access controller, potentially included in the first main control board and the second main control board are not shown in FIG. 7A and FIG. 7B.

In a specific implementation, the third CDR chip may further include a physical medium attachment (physical medium attachment, PMA) sublayers 7034 and 7035. The PMA performs conversion processing on a data bus bit width and a clock domain. After the PMA performs conversion processing, an interface clock is converted into an internally unified clock for processing. This improves processing precision.

The first transceiver module 7031 is further configured to receive third data that is adjusted based on the skew and sent by the first main control board. The first main control board 701 compensates for, based on the first skew, the data to be sent next time. The data to be sent next time herein refers to data (briefly referred to as the third data hereinafter) that is sent most recently after the first main control board 701 receives the first skew. For example, the first main control board may determine, based on the first skew, to delay sending the third data; or the first main control board may determine, based on the first skew, to send the third data in advance. It should be noted that it is almost impossible for the first main control board to completely eliminate the first skew as costs and power consumption increase accordingly for skew elimination. Therefore, in this solution, the first main control board only needs to control precision to be within a preset range.

The second transceiver module 7032 is further configured to receive fourth data sent by the second main control board, where the third data and the fourth data are mutual backup data.

A sixth Ethernet physical coding sublayer 7037 is configured to decode the received third data sent by the first main control board 701 and the received fourth data sent by the second main control board 702, where the sixth Ethernet physical coding sublayer 7037 includes a skew compensation module 70371. The foregoing has described that the skew measurement module 7033 determines the first skew based on the first data and the second data, and the first main control board has performed, based on the first skew, skew compensation on the data to be sent next time, that is, the third data, so that a skew (briefly referred to as a second skew hereinafter) between the third data and the fourth data falls within a preset range, for example, 100 UI. However, there is still a skew, that is, a difference between the first skew and the second skew. In this case, the interface board may perform skew compensation processing on the decoded third data and the decoded fourth data by using the skew compensation module 70371. For example, the skew compensation module 70371 implements strict alignment between AM words sent by the first main control board and the second main control board. The skew compensation module 70371 is used to minimize or eliminate a time difference between the third data and the fourth data. The skew compensation module in this embodiment may be implemented by using any skew compensation circuit, provided that the skew compensation circuit can implement a function of the skew compensation module. The existing skew compensation circuit is a well-known technology, and therefore details are not described herein. It should be noted that, if the first interface board 701 does not compensate for the skew between the third data and the fourth data to a preset range, and only the skew compensation module 70371 compensates for the skew between the third data and the fourth data, a large amount of buffered data is required, resulting in increased costs and power consumption. In this solution, the skew compensation module 70371 collaborates with the main control board to implement strict alignment between the data sent by the first main control board and the data sent by the second main control board. On this basis, an eighth Ethernet physical coding sublayer 7050 codes data. In addition, the eighth Ethernet physical coding sublayer 7050 is further configured to trace the third data, that is, trace a data stream of the active main control board in a downlink sending direction when active/standby switchover occurs. Specifically, the eighth Ethernet physical coding sublayer 7050 may trace an AM in the data stream of the active main control board. Because the skew compensation module has performed skew compensation on the data of the first main control board and the data of the second main control board, the data stream of the standby main control board has been aligned with the data stream of the active main control board, that is, the data stream of the first main control board has been aligned with the data stream of the second main control board. For example, the AM word sent by the first main control board is already aligned with the AM word sent by the second main control board. Therefore, after an electronic switch 7039 determines that the active/standby switchover is performed, the eighth Ethernet physical coding sublayer 7050 traces only data in the active main control board. For example, the eighth Ethernet physical coding sublayer 7050 traces an AM word in the third data in this embodiment of this application, to ensure that output data is aligned with input data. In other words, the AM word sent by the third CDR chip 703 can still be consistent with the AM word of the first main control board. The third data is sent to a peer device through the third transceiver module. According to the foregoing solution, it can be implemented that no shift occurs in uplink and downlink data streams after the data streams pass through the third CDR chip 703. The following uses the downlink direction as an example to describe the technical effects. As described above that the second CDR chip 403 uses the AM deletion and reinsertion technologies, although this can ensure that no service interrupt occurs on the peer device during active/standby switchover, delay jitter is caused when a data stream passes through the second CDR chip. For example, assuming that data blocks before and after a first AM in the first lane sent by the master main control board 401 are a first data block and a second data block, the second CDR chip 403 deletes the first AM and inserts a second AM after receiving the first lane. However, locations of the second AM and the first AM are usually different. Assuming that the second AM is inserted after the second data block, a location of the second data block in the first lane after the second AM is inserted is different from a location of the second data block in the first lane before the first AM is deleted, but the insertion of the second AM makes no difference to the location of the first data block in the first lane. Therefore, it can be learned that due to deletion and insertion of an AM, delay jitter is introduced after a data stream enters the second CDR chip. In this solution, no AM needs to be deleted or inserted, and the interface board traces only one data stream, for example, only an AM in the active main control board. When active/standby switchover occurs, because data streams from the first main control board and the second main control board are aligned in advance in this solution, shift does not occur after the data stream passes through the interface board, by tracing only an AM in the data stream sent by the active main control board after the switchover, and delay jitter is not introduced.

It should be noted that the foregoing description process is a process in which the first main control board is triggered to switch from the standby main control board to the active main control board. For a process in which the second main control board is switched from the standby main control board to the active main control board, refer to the foregoing process. For example, when the second main control board is a standby main control board, a skew compensation module 70381 included in a seventh Ethernet physical coding sublayer 7038 implements strict alignment on data sent by the first main control board and the second main control board. Details are not described herein again. The foregoing describes the processing process of data in the downlink direction. For a case of the uplink direction, a ninth Ethernet physical coding sublayer 7060 decodes the data sent by the peer device and received by the fourth transceiver module 7080. In a specific implementation, the ninth Ethernet physical coding sublayer 7060 may further include a skew compensation module 70611, configured to deskew data of a plurality of lanes received from the peer device. A tracing module traces the decoded data. A tenth Ethernet physical coding sublayer 7040 encodes the data and sends the encoded data to the active main control board. In the uplink direction (a direction from the line side to a system side), the third CDR chip 703 implements dual sending/selective sending functions of data. Because there is only one data source, the tracing module traces an input data stream so that there is little delay jitter in packets in the uplink direction passing through the third CDR chip 703.

The data processing device and system provided in the embodiments of this application are described in detail above. The principle and implementation of this application are described herein through specific examples. The description about the embodiments is merely provided to help understand the method and core ideas of this application. In addition, a person of ordinary skill in the art can make variations to the specific implementations and application scopes according to the idea of this application. Therefore, the content of specification shall not be construed as any limit to this application.

## Claims

1. A data processing device, comprising:
a first transceiver module, configured to receive first data sent by a first main control board;
a second transceiver module, configured to receive second data sent by a second main control board, wherein the first data and the second data are mutual backup data;
a skew measurement module, configured to determine a first skew between the first data and the second data;
a feedback module, configured to send the first skew to a standby main control board in the first main control board and the second main control board, wherein the first skew is used by the first main control board to perform first skew compensation on third data, and the feedback module is the same as or different from the first transceiver module, wherein
the first transceiver module is further configured to: after receiving the first data, receive the third data sent by the first main control board; and
the second transceiver module is further configured to receive fourth data sent by the second main control board, wherein the fourth data and the third data are mutual backup data; and
a skew compensation module, configured to perform second skew compensation on the third data based on the fourth data.

2. The device according to claim 1, further comprising:
a tracing module, configured to: when the first main control board is switched from the standby main control board to an active main control board, trace the third data on which the second skew compensation is performed; and
a fourth transceiver module, configured to send the third data to a peer device.

3. The device according to claim 1 or 2, wherein the first transceiver module comprises P lanes, the second transceiver module comprises Q lanes, and both P and Q are positive integers;
the first transceiver module is specifically configured to receive the first data through the P lanes;
the second transceiver module is specifically configured to receive the second data through the Q lanes; and
the skew measurement module is specifically configured to determine the first skew based on a difference between T1 and T2 and an interface rate of the device, wherein T1 is an arrival moment of a last lane in the P lanes, and T2 is an arrival moment of a last lane in the Q lanes.

4. The device according to claim 3, wherein each of the P lanes comprises an alignment marker AM, each of the Q lanes comprises an AM, T1 is an arrival moment of an AM in the last lane of the P lanes, and T2 is an arrival moment of an AM in the last lane of the Q lanes.

5. The device according to claim 1 or 2, wherein the first transceiver module comprises P lanes, the second transceiver module comprises Q lanes, and both P and Q are positive integers;
the first transceiver module is specifically configured to receive the first data through the P lanes;
the second transceiver module is specifically configured to receive the second data through the Q lanes;
the device further comprises:
a buffering module, configured to buffer the P lanes and the Q lanes when receiving data of a first lane; and
the skew measurement module is specifically configured to determine the first skew based on a first buffer and a second buffer, wherein the first buffer is a buffer accumulated in the P lanes when a last lane of the P lanes arrives, and the second buffer is a buffer accumulated in the Q lanes when a last lane of the Q lanes arrives.

6. A data processing device, comprising:
a first transceiver module, configured to send first data to an interface board;
an obtaining module, configured to obtain a first skew, wherein the first skew is a skew between first data and second data, the first skew is determined by the interface board, the second data is data sent by a second main control board, the second data and the first data are mutual backup data, the second main control board and the first main control board work in an active/standby mode, and the second transceiver module is the same as or different from the first transceiver module; and
a processing module, configured to perform skew compensation on third data based on the first skew obtained by the second transceiver module, wherein
the first transceiver module is further configured to send the third data on which the skew compensation is performed.

7. A data processing system, wherein the data processing system comprises an interface board and a main control board, wherein
the interface board is the data processing device according to any one of claims 1 to 5; and
the main control board is the data processing device according to claim 6.

8. A data processing system, wherein the data processing system comprises a clock data recovery CDR chip and a network processor NP chip, wherein
the CDR chip is the data processing device according to any one of claims 1 to 5; and
the NP chip is the data processing device according to claim 6.

9. A packet transport network PTN device, wherein the PTN device comprises an interface board and a main control board, wherein
the interface board is the data processing device according to any one of claims 1 to 5; and
the main control board is the data processing device according to claim 6.

10. A packet transport network PTN device, wherein the PTN device comprises a clock data recovery CDR chip and a network processor NP chip, wherein
the CDR chip is the data processing device according to any one of claims 1 to 5; and
the NP chip is the data processing device according to claim 6.
